# EUROPÄISCHE PATENTSCHRIFT

(11) **EP 2 214 991 B1**
(45) Veröffentlichungstag und Bekanntmachung des Hinweises auf die Patenterteilung: **28.12.2011**
(21) Anmeldenummer: 08838513.3
(22) Anmeldetag: 10.10.2008
(51) Int. Cl.: B65G 53/60

(54) **MATERIALABSCHEIDER FÜR FÖRDERSYSTEME**
MATERIAL SEPARATOR FOR DELIVERY SYSTEMS
SÉPARATEUR DE MATÉRIAU POUR SYSTÈMES DE TRANSPORT

(30) Priorität: 12.10.2007 AT 16422007
(43) Veröffentlichungstag der Anmeldung: 11.08.2010
(73) Patentinhaber: WITTMANN KUNSTSTOFFGERÄTE GMBH, 1220 Wien (AT)
(72) Erfinder: FUX, Erhard, A-1230 Wien (AT)
(74) Vertreter: Krause, Peter
(86) Internationale Anmeldenummer: PCT/AT2008/000368
(87) Internationale Veröffentlichungsnummer: WO 2009/046478

(56) Entgegenhaltungen:
- EP-A- 1 568 633
- DE-A1- 2 535 294

## Beschreibung

Die Erfindung betrifft einen Materialabscheider für Fördersysteme, insbesondere für Kunststoff-Granulat verarbeitende Maschinen, wobei ein mit einer Abdeckhaube bzw. einem Deckel versehener Behälter mit einem seitlich angeordneten Materialzuführungsanschluss und einem darüber seitlich angeordneten Absauganschluss sowie vorzugsweise einer, am unteren Ende des Behälters angeordneten, Verschlussvorrichtung vorgesehen ist und im Inneren des Behälters zwischen Materialzuführungsanschluss und Absauganschluss ein sich über den Querschnitt des Behälters erstreckendes Sieb vorgesehen ist.

Es ist aus der EP 1 568 633 A1 ein Materialabscheider gemäβ dem Oberbegriff des Anspruchs 1 für Fördersysteme, insbesondere für Kunststoff-Granulat verarbeitende Maschinen, bekannt, wobei dieser einen mit einer Abdeckhaube versehenen Behälter mit einem seitlich angeordneten Materialzuführungsanschluss und einem darüber seitlich angeordneten Absauganschluss aufweist. Am unteren Ende des Behälters ist eine Verschlusseinrichtung vorgesehen und im Inneren des Behälters ist zwischen Materialzuführungsanschluss und Absauganschluss ein sich über den Querschnitt des Behälters erstreckendes Sieb vorgesehen.

Weiters ist aus der DE 25 35 294 A1 eine Einrichtung zum Reinigen von in geschlossenen Behältern im Saugbetrieb arbeitenden Staubfiltern bekannt.

Derartige Materialabscheider werden in der Kunststoff-Granulat verarbeitenden Industrie zur Bereitstellung des Granulates an der gewünschten Stelle, sei es vor dem Trocknungssilo oder vor der Kunststoff-Granulat verarbeitenden Maschine, wie beispielsweise einer Spritzgussmaschine oder einem Extruder, eingesetzt. Diese Materialabscheider dienen somit der Vorort-Bereitstellung des Materials aus dem Hauptmaterialfluss. Prinzipiell unterscheidet man zwischen der Überdruckförderung und der Unterdruckförderung, wobei der Überdruckförderung der Nachteil anhängt, dass an jedem Entnahmeort bzw. -behälter ein Pressluftanschluss, also ein Pressluftnetz, vorgesehen werden muss. Die Förderung über eine Saug- oder Vakuumpumpe gestaltet sich einfacher.

Es sind ferner verschiedene Einrichtungen zur pneumatischen Förderung von Schüttgut bekannt, so beispielsweise aus der DE 103 13 570 A1. Entsprechend dieser Einrichtung werden Druckverluste durch den Einsatz von Blenden als Durchlaufbegrenzer ausgeglichen.

Weiters ist aus der EP 1 508 542 A2 eine Vorrichtung zum Fördern von abrasiven Schüttgut bekannt. Ein weiteres Verfahren bzw. eine Vorrichtung zur pneumatischen Förderung von Schüttgut, insbesondere geperlten Ruß ist aus der EP 1 588 963 A1 bekannt.

Aus der DE 195 28 636 A1 ist eine Einrichtung zum Fördern und Dosieren von Schüttgut bekannt, wobei an den Dosierbehälter eine Förderleitung für das Schüttgut und ein Saug- bzw. Druckaggregat angeschlossen ist. Bei einer derartigen Einrichtung ist ein zusätzliches Fördergerät überflüssig.

Die DE 39 36 009 A1 beschreibt eine Saugfördereinrichtung bei der der Maschinenbehälter gleichzeitig den Vukuumtrichter des Saugfördergerätes bildet.

Ferner ist noch aus der DE 27 48 735 A1 ein Saugfördergerät für körniges oder pulverförmiges Transportgut bekannt, das einen Abscheiderbehälter mit einem Gebläse und Filterpatronen aufweist.

Alle obigen Einrichtungen und Geräte weisen insbesondere den Nachteil auf, dass sie einen komplizierten Aufbau durch die oftmals vorgegebene Aufgabenkumulierung besitzen.

Aus der WO 2006/050361 A2 ist ein Vakuum-Material-Abscheider bekannt, der einen Behälter mit einer geneigten Behälterachse aufweist. Zur geneigten Fixierung des Behälters sind aufwendige maschinenbautechnische Konstruktionen vorgesehen, die sich überaus nachteilig auf das Schwingungsverhalten der Gesamtanlage auswirken.

Aufgabe der Erfindung ist es, einen Materialabscheider der eingangs zitierten Art zu schaffen, der einerseits die oben aufgezeigten Nachteile vermeidet und der anderseits eine größtmögliche Modularität für ein zentrales Fördersystem aufweist.

Die Aufgabe wird durch die Erfindung gelöst.

Die Erfindung ist dadurch gekennzeichnet, dass der Behälter bzw. die Behälteroberkante abdeckhaubenseitig bzw. deckelseitig entsprechend eines ebenen Schnittes abgeschrägt ist, wobei die Schräge der Behälteroberkante von der Erzeugenden des Behälters durch die bzw. im Bereich der Anschlüsse, zur diametralen Seite bzw. Punkt verläuft und der höhere Punkt der Schräge auf der Erzeugenden durch die bzw. im Bereich der Anschlüsse liegt und dass das Sieb sich vom Bereich zwischen dem Materialzuführungsanschluss und dem Absauganschluss im Behälterinneren in Richtung Deckel bis in den Bereich der Behälteroberkante erstreckt. Mit der Erfindung ist es erstmals möglich den komplexen Anforderungen an einen Materialabscheider gerecht zu werden. Die kompletten Anforderungen reichen von vollständiger Dichtheit über Abrasionsfestigkeit bis zur einfachen Reinigung und Wartung der Einrichtung. Der erfindungsgemäße Materialabscheider kann senkrecht angeordnet werden, wodurch eine überaus einfache und stabile Befestigung möglich ist. Durch die Abschrägung der Behälteroberkante ist er nicht nur optisch unverkennbar, sondern es werden auch ein maximaler Querschnitt und damit ein einfachster Zugang für eine gründliche Reinigung, die insbesondere nach jedem Materialwechsel durchgeführt werden muss, erreicht. Da ein Materialwechsel in Abhängigkeit der Applikation in der Praxis sehr häufig durchgeführt wird, ist eine leichte Reinigungsmöglichkeit ein wesentliches Kriterium für eine dauerhafte und effiziente Nutzung des Materialabscheiders.

Nach einer besonderen Ausgestaltung der Erfindung ist der Behälter ein Zylinder. Eine derartige Formgebung des Behälters hat sich in der Praxis bestens bewährt, da dadurch keine Ecken bei der Reinigung gegeben sind.

Gemäß einem besonderen Merkmal der Erfindung ist das Sieb, vorzugsweise dachförmig, geknickt und ein Teil erstreckt sich vom Bereich zwischen dem Materialzuführungsanschluss und dem Absauganschluss im Behälterinneren in Richtung Deckel bis in etwa den Bereich der halben Höhe der schrägen Behälteroberkante und der andere Teil des Siebes überdeckt die weitere Behälterinnenfläche. Dadurch wird der zwischen dem Materialzuführungsanschluss und dem Absauganschluss liegende Bereich über den kompletten Behälterinnenquerschnitt optimal genützt. Das Material, also insbesondere das Kunststoff-Granulat, wird über den Sauganschluss aus dem Materialzuführungsanschluss angesaugt. Die Saugluft aus dem Luft-Granulat Gemisch durchdringt das Sieb, wird also von Material befreit und strömt über den Absauganschluss ab.

Nach einer besonderen Ausgestaltung der Erfindung ist das Sieb, vorzugsweise dachförmig, geknickt und ein Teil erstreckt sich vom Bereich zwischen dem Materialzuführungsanschluss und dem Absauganschluss im Behälterinneren in Richtung Deckel bis in etwa den Bereich der halben Höhe der schrägen Behälteroberkante und der andere Teil des Siebes verläuft parallel zur Abdeckhaube bzw. dem Deckel. Diese besondere Ausgestaltung bringt den Vorteil mit sich, dass die Streuung des aus der Materialzuführungsleitung kommenden Granulates beeinflusst werden kann. Eine gleichmäßige Verteilung über den Behälterquerschnitt kann damit erreicht werden.

Gemäß einer weiteren besonderen Ausgestaltung der Erfindung ist das Sieb, insbesondere der parallel zur Abdeckhaube bzw. dem Deckel verlaufende Teil, zur Abdeckhaube bzw. zum Deckel mit einem Abstand angeordnet bzw. ist zwischen dem Sieb und der Abdeckhaube bzw. dem Deckel ein Kanal für eine Luftführung vorgesehen. Dadurch kann für den Luftabzug der komplette Querschnitt des Behälterinneren genützt werden. Das Volumen zwischen Sieb und Deckel für den Luftaustritt wird nicht beeinträchtigt.

Nach einem besonderen Merkmal der Erfindung ist das Sieb mit der Abdeckhaube bzw. dem Deckel verbunden. Das Sieb wird mit der Abdeckhaube bzw. mit dem Deckel verbunden, wodurch mit dem Öffnen des Deckels das Sieb aus dem Innenbereich geschwenkt bzw. mit dem Schließen automatisch in die richtige Position zwischen Materialeinlass und Vakuumauslass geführt wird. Neben der bequemen Handhabung des Gerätes zur Reinigung ist somit zusätzlich auch ein wichtiger Sicherheitsaspekt erfüllt, da der Bediener, meist auf der Maschine stehend, möglichst keine losen Teile hantieren zu hat.

Gemäß einer weiteren Ausgestaltung der Erfindung ist das Sieb ein integraler Bestandteil der Abdeckhaube bzw. des Deckels. Insbesondere, wenn der Deckel unverlierbar mit dem Sieb verbunden ist, sind die obigen Sicherheitsaspekte dauerhaft gewährleistet.

Nach einer Weiterbildung der Erfindung ist die Abdeckhaube bzw. der Deckel über ein lösbares Scharnier mit dem Behälter verbunden. Für die Reinigung des Siebes kann der Deckel bzw. die Abdeckhaube einfach aus dem Scharnier entnommen werden und gegebenenfalls am Hallenboden mit Pressluft behandelt werden.

Gemäß einer Ausgestaltung der Erfindung ist das Sieb aus einem Edelstahllochgitter hergestellt. Dadurch ist die entsprechende Abrasionsfestigkeit gewährleistet. Außerdem ist eine einwandfreie Reinigung einfach möglich.

Nach einem weiteren besonderen Merkmal der Erfindung schließt die Schräge der Behälteroberkante zur Behältermittelachse einen Winkel von etwa 45 bis 80°, vorzugsweise 50 bis 60° ein. Durch diese Winkelfestlegung kann ein optimaler Kompromiss zwischen Behältervolumen und einfacher, bequemer Bedienung zur Reinigung des Behälters erreicht werden.

Die Erfindung wird an Hand von Ausführungsbeispielen, die in der Zeichnung dargestellt sind, näher erläutert.

Es zeigen:
Fig. 1 einen Schnitt durch einen Materialabscheider und
Fig. 2 eine isometrische Darstellung des Materialabscheiders mit geöffneten Deckel.

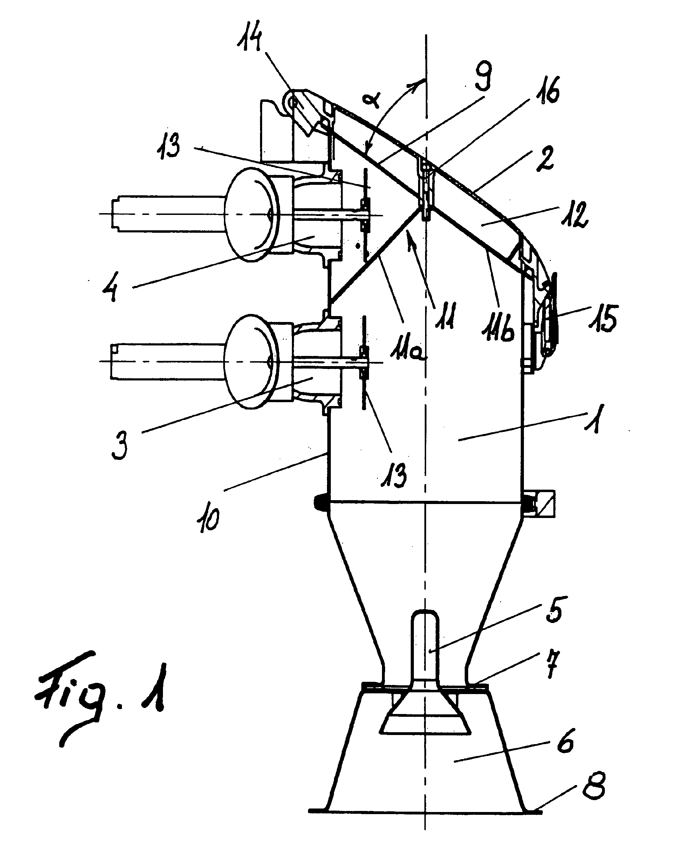

Gemäß der Fig. 1 ist ein Materialabscheider für Fördersysteme, insbesondere für Kunststoff-Granulat verarbeitende Maschinen, gezeigt. Der Behälter 1 ist als Zylinder ausgebildet. Der Behälter 1 ist mit einer Abdeckhaube bzw. einem Deckel 2 versehen. Ferner weist der Behälter 1 einen seitlich angeordneten Materialzuführungsanschluss 3 und einem darüber seitlich angeordneten Absauganschluss 4 auf. Am unteren Ende des Behälters 1 ist eine Verschlussvorrichtung 5 vorgesehen.

Die Verschlussvorrichtung 5 kann eine herkömmliche Auslaufklappe sein oder auch eine pneumatisch betätigte Materialauslaufglocke.

Die Ausbildung der Verschlussvorrichtung 5 als pneumatisch betätigte Materialauslaufglocke hat spezielle Vorteile. Durch eine Zwangssteuerung dieser Materialauslaufglocke haben Unterschiede im atmosphärischen Druck zwischen Innenbehälter des Materialabscheiders und dem Auslaufkonus keine Auswirkung auf die Funktion des Gerätes. Das eliminiert auch die Notwendigkeit eines Filtereinsatzes im Konus, der bei Materialwechsel gereinigt werden muss.

Ferner kann dieser Materialabscheider auch optional mit einem dreifach geschirmten, kapazitiven - nicht dargestellten - Füllstandsmelder ausgestattet werden, um die Programmierung und fehlerhafte Eingabe von Ladezeiten zu vermeiden.

Der Materialabscheider weist an seinem unteren Ende des Behälters 1 einen glockenförmigen Befestigungssockel 6 auf, mit dem eine sichere und stabile Befestigung des Behälters 1 an einer Maschine möglich ist. Der Behälter 1 ist mit einer Flanschverbindung 7 am Befestigungssockel 6 montiert. Ferner ist der Befestigungssockel 6 wieder mit einer Flanschverbindung 8 auf der Maschine befestigt.

Der Behälter 1 bzw. seine Behälteroberkante 9 ist abdeckhaubenseitig bzw. deckelseitig entsprechend eines ebenen Schnittes abgeschrägt. Die Schräge der Behälteroberkante 9 verläuft von der Erzeugenden 10 des Behälters 1 durch die bzw. im Bereich der Anschlüsse 3, 4 zur diametralen Seite bzw. Punkt, wobei der höhere Punkt der Schräge auf der Erzeugenden durch die bzw. im Bereich der Anschlüsse 3, 4 liegt. Die Schräge der Behälteroberkante 9 zur Behältermittelachse schließt einen Winkel α von etwa 40 bis 75°, vorzugsweise 50 bis 60° ein.

Im Inneren des Behälters 1 ist zwischen Materialzuführungsanschluss 3 und Absauganschluss 4 ein sich über den Querschnitt des Behälters 1 erstreckendes Sieb 11 vorgesehen. Das Sieb 11 erstreckt sich vom Bereich zwischen dem Materialzuführungsanschluss 3 und dem Absauganschluss 4 im Behälterinneren in Richtung Deckel 2 bis in den Bereich der Behälteroberkante 9.

Das Sieb 11 ist, vorzugsweise dachförmig, geknickt, wobei sich ein Teil 11 a vom Bereich zwischen dem Materialzuführungsanschluss 3 und dem Absauganschluss 4 im Behälterinneren in Richtung Deckel 2 bis in etwa den Bereich der halben Höhe der schrägen Behälteroberkante 9 erstreckt und der andere Teil 11 b des Siebes 11 die weitere Behälterinnenfläche überdeckt. Insbesondere ist es vorteilhaft, wenn der andere Teil 11 b des Siebes 11 parallel zur Abdeckhaube bzw. dem Deckel 2 verläuft und der parallel zur Abdeckhaube bzw. dem Deckel 2 verlaufende Teil 11 b, zur Abdeckhaube bzw. zum Deckel 2 mit einem Abstand angeordnet ist bzw. zwischen dem Sieb 11 und der Abdeckhaube bzw. dem Deckel 2 ein Kanal 12 für eine Luftführung vorgesehen ist.

Das Sieb 11 ist mit der Abdeckhaube bzw. dem Deckel 2, beispielsweise über eine Schraubverbindung 16, verbunden bzw. ist ein integraler Bestandteil der Abdeckhaube bzw. des Deckels 2.

Der Materialabscheider kann bereits bei seiner Konzeption auf größtmögliche Modularität ausgelegt werden. Der Materialzuführungsanschluss 3 und der darüber angeordnete Absauganschluss 4 können auf einfachste Art an unterschiedliche Durchmesser der Materialleitungen bzw. Absaugleitungen angepasst werden. Mit Hilfe eines Baukastensystems, das aus drei unterschiedlichen Durchmessern und dazu abgestimmten mittleren Zylindersegmenten besteht, kann für jeden gewünschten Durchsatz das optimale Fördergerät konzipiert werden. Derartige Geräte eignen sich für Einzelleitungen, als auch für Sammelleitungen mit Dosierweichen.

Im Behälterinneren sind im Bereich der Einlässe des Materialzuführungsanschlusses 3 und des Absauganschlusses 4 Dichtscheiben 13 vorgesehen, die die Einlässe verschließen, wenn keine Materialförderung stattfindet.

Der Deckel 2 ist einerseits über ein lösbares Scharnier 14 mit dem Behälter 1 verbunden und weist anderseits an seiner diametralen Stelle einen Spannhebelverschluss 15 auf, der in seiner Schließstellung die Dichtheit von Deckel 2 und Behälter 1 gewährleistet.

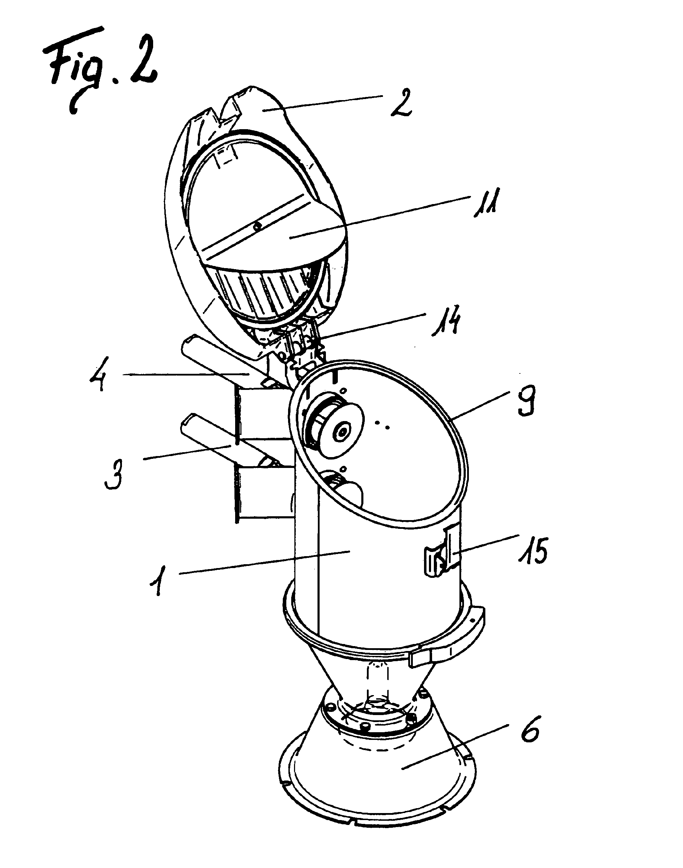

Gemäß der Fig. 2 wird die sichere und bequeme Handhabung bei der Reinigung des Materialabscheiders dargelegt. Wie bereits aufgezeigt, besteht der Materialabscheider aus dem Behälter 1 mit seiner schräg verlaufenden Behälteroberkante 9 der am unteren Ende des Behälters 1 einen Befestigungssockel 6, beispielsweise für die Befestigung auf einer Maschine, aufweist. Seitlich sind der Materialzuführungsanschluss 3 und der Absauganschluss 4 angeordnet. Zum Verschließen des Behälters 1 ist der Deckel 2 vorgesehen.

Zum Reinigen des Behälterinneren wird der Deckel 2 durch Lösung des Spannhebelverschlusses 15 geöffnet. Mit dem Öffnen des Deckels 2 wird das Sieb 11 aus seiner Position im Behälterinneren herausgeklappt, da das Sieb mit dem Deckel 2 verbunden ist und ein integrierender Bestandteil des Deckels 2 ist.

Da derartige Materialabscheider an ihrem Einsatzort meist sehr hoch angeordnet sind, der Bediener meist auf einer Leiter steht und im Behälterinneren zur Behälterreinigung hantiert, ist durch die schräge Behälteroberkante 9 ein optimaler Kompromiss zwischen Behältervolumen und einfacher, bequemer Bedienung zur Reinigung des Behälters 1 gegeben.

Zur Reinigung des Siebes 11 kann der Deckel 2 über das lösbare Scharnier 14 abgenommen werden und das Sieb 11 kann an geeigneter Stelle gründlich einer Reinigung unterzogen werden.

In dieser Darstellung des Materialabscheiders ist auch das geknickte Sieb 11 deutlich dargestellt. Im geschlossenen Zustand des Deckels 2 ist es in seiner aufgabengemäßen Lage, die Saugluft von dem mit Granulat beladenen Luftstrom zu trennen. Wird der Deckel 2 geschlossen, ist das Sieb 11 automatisch in seiner richtigen Position.

Dieser aufgezeigte Materialabscheider erfüllt somit die an ihn gestellten Anforderungen, sowohl in Hinblick Dichtheit und Abrasionsfestigkeit und insbesondere auch zu einer einfachen Reinigung. Gerade die, den Sicherheitsaspekten Rechnung tragende, einfache Reinigungsmöglichkeit ist ein wesentliches Kriterium für eine dauerhafte und effiziente Nutzung.

## Patentansprüche

1. Materialabscheider für Fördersysteme, insbesondere für Kunststoff-Granulat verarbeitende Maschinen, wobei ein mit einer Abdeckhaube bzw. einem Deckel (2) versehener Behälter (1) mit einem seitlich angeordneten Materialzuführungasanschluss (3) und einem darüber seitlich angeordneten Absauganschluss (4) sowie vorzugsweise einer, am unteren Ende des Behälters angeordneten Verschlussvorrichtung (5) vorgesehen ist und im Inneren des Behälters (1) zwischen Materialzuführungsanschluss (3) und Absauganschluss (4) ein sich über den Querschnitt des Behälters (1) erstreckendes Sieb (11) vorgesehen ist, **dadurch gekennzeichnet, dass** der Behälter (1) bzw. die Behälteroberkante (9) abdeckhaubenseitig bzw. deckelseitig entsprechend eines ebenen Schnittes abgeschrägt ist, wobei die Schräge der Behälteroberkante (9) von der Erzeugenden (10) des Behälters (1) durch die bzw. im Bereich der Anschlüsse (3, 4), zur diametralen Seite bzw. Punkt verläuft und der höhere Punkt der Schräge auf der Erzeugenden (10) durch die bzw. im Bereich der Anschlüsse (3, 4) liegt und dass das Sieb (11) sich vom Bereich zwischen dem Materialzuführungsanschluss (3) und dem Absauganschluss (4) im Behälterinneren in Richtung Deckel (2) bis in den Bereich der Behälteroberkante (9) erstreckt.

2. Materialabscheider nach Anspruch 1, **dadurch gekennzeichnet, dass** der Behälter (1) ein Zylinder ist.

3. Materialabscheider nach Anspruch 1 oder 2, **dadurch gekennzeichnet, dass** das Sieb (11), vorzugsweise dachförmig, geknickt ist und ein Teil (11 a) sich vom Bereich zwischen dem Materialzuführungsanschluss (3) und dem Absauganschluss (4) im Behälterinneren in Richtung Deckel (2) bis in etwa den Bereich der halben Höhe der schrägen Behälteroberkante (9) erstreckt und der andere Teil (11b) des Siebes (11) die weitere Behälterinnenfläche überdeckt.

4. Materialabscheider nach einem der Ansprüche 1 bis 3, **dadurch gekennzeichnet, dass** das Sieb (11), vorzugsweise dachförmig, geknickt ist und ein Teil (11a) sich vom Bereich zwischen dem Materialzuführungsanschluss (3) und dem Absauganschluss (4) im Behälterinneren in Richtung Deckel (2) bis in etwa den Bereich der halben Höhe der schrägen Behälteroberkante (9) erstreckt und der andere Teil (11 b) des Siebes (11) parallel zur Abdeckhaube bzw. dem Deckel (2) verläuft.

5. Materialabscheider nach einem der Ansprüche 1 bis 4, **dadurch gekennzeichnet, dass** das Sieb (11), insbesondere der parallel zur Abdeckhaube bzw. dem Deckel verlaufende Teil (11 b), zur Abdeckhaube bzw. zum Deckel (2) mit einem Abstand angeordnet ist bzw. zwischen dem Sieb (11) und der Abdeckhaube bzw. dem Deckel (2) ein Kanal (12) für eine Luftführung vorgesehen ist.

6. Materialabscheider nach einem der Ansprüche 1 bis 5, **dadurch gekennzeichnet, dass** das Sieb (11) mit der Abdeckhaube bzw. dem Deckel (2) verbunden ist.

7. Materialabscheider nach einem der Ansprüche 1 bis 6, **dadurch gekennzeichnet, dass** das Sieb (11) ein integraler Bestandteil der Abdeckhaube bzw. des Deckels (2) ist.

8. Materialabscheider nach einem der Ansprüche 1 bis 7, **dadurch gekennzeichnet, dass** die Abdeckhaube bzw. der Deckel (2) über ein lösbares Scharnier (14) mit dem Behälter (1) verbunden ist.

9. Materialabscheider nach einem der Ansprüche 1 bis 8, **dadurch gekennzeichnet, dass** das Sieb (11) aus einem Edelstahllochgitter hergestellt ist.

10. Materialabscheider nach einem der Ansprüche 1 bis 9, **dadurch gekennzeichnet, dass** die Schräge der Behälteroberkante (9) zur Behältermittelachse einen Winkel (α) von etwa 40 bis 75°, vorzugsweise 50 bis 60° einschließt.

## Claims

1. Material separator for delivery systems, particularly for machines processing plastic granules, whereby a receptacle (1) provided with a cover hood or a lid (2) comprises a laterally disposed material supply connection (3) and a laterally disposed suction connection (4) provided above the same, and preferably a closing device (5) disposed at the lower end of the receptacle (1), and on the inside of the receptacle (1), a screen (11) extending across the cross-section of the receptacle (1) is provided between the material supply connection (3) and the suction connection (4), **characterised by** the fact that the receptacle (1), or the upper receptacle edge (9), is tapered on the cover hood side, or the lid side, in accordance with a flat cut, whereby the inclination of the upper receptacle edge (9) runs from the generatrix (10) of the receptacle (1) through the or in the region of the connections (3, 4) to the diametrical side or point and the higher point of the inclination is located on the generatrix (10) through the or in the region of the connections (3, 4), and that the screen (11) extends from the region between the material supply connection (3) and the suction connection (4) on the inside of the receptacle toward the lid (2) into the region of the inclined upper receptacle edge (9).

2. Material separator in accordance with Claim 1, **characterised by** the fact that the receptacle (1) is a cylinder.

3. Material separator in accordance with Claim 1 or 2, **characterised by** the fact that the screen (11) is preferably bent in a roof-like manner and one part (11 a) extends from the region between the material supply connection (3) and the suction connection (4) on the inside of the receptacle toward the lid (2) into roughly the region of half the height of the inclined upper receptacle edge (9), and the other part (11 b) of the screen (11) covers the remaining inner surface of the receptacle.

4. Material separator in accordance with one of the Claims 1 to 3, **characterised by** the fact that the screen (11) is preferably bent in a roof-like manner and one part (11a) extends from the region between the material supply connection (3) and the suction connection (4) on the inside of the receptacle toward the lid (2) into roughly the region of half the height of the inclined upper receptacle edge (9), and the other part (11 b) of the screen (11) runs in parallel to the cover hood or the lid (2).

5. Material separator in accordance with one of the Claims 1 to 4, **characterised by** the fact that the screen (11), in particular the part (11b) running in parallel to the cover hood or the lid, is positioned with a distance to the cover hood or the lid (2) and/or a channel (12) for air conduction is provided between the screen (11) and the cover hood or the lid (2).

6. Material separator in accordance with one of the Claims 1 to 5, **characterised by** the fact that the screen (11) is connected with the cover hood or the lid (2).

7. Material separator in accordance with one of the Claims 1 to 6, **characterised by** the fact that the screen (11) is an integrated part of the cover hood or the lid (2).

8. Material separator in accordance with one of the Claims 1 to 7, **characterised by** the fact that the cover hood or the lid (2) is connected with the receptacle (1) via a detachable hinge (14).

9. Material separator in accordance with one of the Claims 1 to 8, **characterised by** the fact that the screen (11) is made of a stainless steel punched lattice.

10. Material separator in accordance with one of the Claims 1 to 9, **characterised by** the fact that the inclination of the upper receptacle edge (9) to the central receptacle axis forms an angle (α) of roughly 40 to 75°, preferably 50 to 60°.

## Revendications

1. Séparateur de matières pour systèmes de convoyage, notamment pour des machines travaillant des granules en plastique, composé d'un récipient (1) équipé d'un capot ou d'un couvercle (2), d'un raccord latéral d'alimentation de matériaux (3) et au-dessus de ce dernier, d'un raccord latéral d'aspiration (4), ainsi que de préférence, d'une fermeture (5) au bout inférieur du récipient (1), et d'un tamis (11) couvrant toute la section du récipient (11) et situé entre le raccord d'alimentation (3) et le raccord d'aspiration (4). Ce séparateur est **caractérisé par le fait que** le récipient (1) et plus précisément l'arête supérieure (9) du récipient est biseautée du côté du capot ou du couvercle, le biseau étant en coupe plane, l'arête en biseau (9) du récipient passant de la génératrice (10) du récipient (1) via les raccords (3, 4) jusqu'au côté ou au point diamétralement opposé, le point plus haut du biseau étant situé sur la génératrice (10) passant jusqu'aux raccords (3, 4) et le tamis (11) s'étendant à l'intérieur du couvercle, dans le sens du couvercle (2), de la zone entre le raccord d'alimentation en matériau (3) d'une part et le raccord d'aspiration (4) de l'autre jusque dans la zone du bord supérieur du récipient (9).

2. Séparateur de matières selon la revendication 1, **caractérisé par le fait que** le récipient (1) est de forme cylindrique.

3. Séparateur de matières selon les revendications 1 ou 2, **caractérisé par le fait que** le tamis (11) est plié de préférence comme un toit et qu'une partie (11a) s'étend en direction du couvercle (2) de la zone entre le raccord d'alimentation du matériau (3) et le raccord d'aspiration (4) à l'intérieur du récipient jusqu'à la mi-hauteur de l'arête supérieure, en biseau (9), du récipient, tandis que l'autre partie (11b) du tamis (11) couvre le reste de la surface intérieure du récipient.

4. Séparateur de matières selon l'une des revendications 1 à 3, **caractérisé par le fait que** le tamis (11), en forme de toit, est pilé et qu'une partie (11a) s'étend dans le sens du couvercle, de la zone entre le raccord d'alimentation du matériau (3) et le raccord d'aspiration (4) à l'intérieur du récipient jusqu'à la mi hauteur de l'arête du récipient (9), en biseau, et que l'autre partie (11b) du tamis (11) est parallèle au capot ou au couvercle (2).

5. Séparateur de matières selon l'une des revendications 1 à 4, **caractérisé par le fait que** le tamis (11), dont notamment la partie en parallèle (11 b) au capot ou au couvercle est arrangé avec un écart par rapport au capot ou au couvercle (2) et qu'entre le tamis (11) et le capot (2), un canal (12) d'amenée d'air est prévu.

6. Séparateur de matières selon l'une des revendications 1 à 5, **caractérisé par le fait que** le tamis (11) est lié au capot ou au couvercle (2).

7. Séparateur de matières selon l'une des revendications 1 à 6, **caractérisé par le fait que** le tamis (11) est une partie intégrante du capot ou du couvercle (2).

8. Séparateur de matières selon l'une des revendications 1 à 7, **caractérisé par le fait que** le couvercle (2) est lié au récipient par une charnière amovible (14).

9. Séparateur de matières selon l'une des revendications 1 à 8, **caractérisé par le fait que** le tamis (11) est fabriqué d'une tôle perforée en acier inoxydable.

10. Séparateur de matières selon l'une des revendications 1 à 8, **caractérisé par le fait que** le biseau de l'arête supérieure (9) du récipient inclue un angle (α) de 40° à 75°, et de 50° à 60° environ, par rapport à l'axe moyen du récipient.
